# EUROPÄISCHE PATENTSCHRIFT

(11) **EP 0 965 414 B1**
(45) Veröffentlichungstag und Bekanntmachung des Hinweises auf die Patenterteilung: **07.04.2004**
(21) Anmeldenummer: 99110449.8
(22) Anmeldetag: 29.05.1999
(51) Int. Cl.: B23Q 7/14

(54) **Werkstückträger**
Workpiece carrier
Support de pièces

(30) Priorität: 17.06.1998 DE 19826863
(43) Veröffentlichungstag der Anmeldung: 22.12.1999
(73) Patentinhaber: ROBERT BOSCH GMBH, 70442 Stuttgart (DE)
(72) Erfinder: Bredenfeld, Guido, 71706 Markgroeningen (DE)

(56) Entgegenhaltungen:
- EP-A- 0 337 891
- DE-A- 3 633 702

## Beschreibung

### Stand der Technik

Die Erfindung geht aus von einem Werkstückträger nach der Gattung des Hauptanspruchs. Beispielsweise aus der EP 37 361 B1 ist ein Werkstückträger für den Transport durch einen Gurtförderer, insbesondere einen Doppelgurtförderer bekannt. Derartige Werkstückträger werden in industriellen Montage- und Fertigungsanlagen eingesetzt. Der Werkstückträger liegt auf dem Gurtförderer auf und wird über einen Reibschluß zwischen dem Werkstückträger und dem Gurtförderer transportiert. Vor Bearbeitungsstationen oder Übergabestellen zu anderen Gurtförderern werden diese Werkstückträger zum Stillstand gebracht. Dies geschieht in der Regel über Stopper, die über einen verfahrbaren Nocken verfügen, der in die Bewegungsbahn des Werkstückträgers gefahren werden kann und diesen dadurch anhält. Wird der Werkstückträger angehalten, so gleitet der Gurtförderer weiterhin unter dem Werkstückträger hindurch. Ist der Werkstückträger nicht mehr abgebremst, d.h. der Nocken des Stoppers gibt den Weg frei, so benötigt der Werkstückträger noch eine gewissen Zeit, um - durch den Gurtförderer gefördert - die Bearbeitungsstation oder die Übergabestelle zu erreichen. Durch ein gewisses Gleiten des Gurtförderers unter dem Werkstückträger während dem Anfahren kann noch zusätzliche Zeit verloren gehen. Jedenfalls steigt somit die gesamte Taktzeit der betroffenen Montage- oder Fertigungsanlage.

### Vorteile der Erfindung

Der erfindungsgemäße Werkstückträger mit den kennzeichnenden Merkmalen des Hauptanspruchs hat demgegenüber den Vorteil, daß beim Anfahren, d.h. wenn der Werkstückträger nicht mehr abgebremst wird, weniger Zeit verloren geht. Ein besonders einfacher Aufbau ergibt sich, wenn eine Feder über ein Koppelelement durch die Förderbewegung des Gurtförderers gespannt wird. Durch einen Belag mit einem anisotropen Reibungsverhalten lassen sich Reibwerte optimal nützen. Durch Andrückfedern lassen sich die Reibwerte der Koppelelemente und des Gurtförderers verbessern. Sind die Andrückfedern so bemessen, daß der Werkstückträger den Gurtförderer nur noch über die Energiespeicher berührt, so läßt sich alle unerwünschte Reibung eliminieren.

Weitere Vorteile und vorteilhafte Weiterbildungen des erfindungsgemäßen Werkstückträgers ergeben sich aus den Unteransprüchen und der Beschreibung.

### Zeichnung

Ein Ausführungsbeispiel der Erfindung ist in der Zeichnung dargestellt und in der nachfolgenden Beschreibung näher erläutert. Es zeigen
Figur 1 einen Werkstückträger mit angedeuteten Energiespeichern auf einem Gurtförderer in einer Draufsicht,
Figur 2 eine Seitenansicht gemäß Figur 1, mit einem ersten Energiespeicher,
Figur 3 die gleiche Seitenansicht gemäß Figur 1 mit einem zweiten abgewandelten Energiespeicher und
Figur 4 nochmals die Seitenansicht gemäß Figur 1 mit einem dritten abgewandelten Energiespeicher.

### Beschreibung

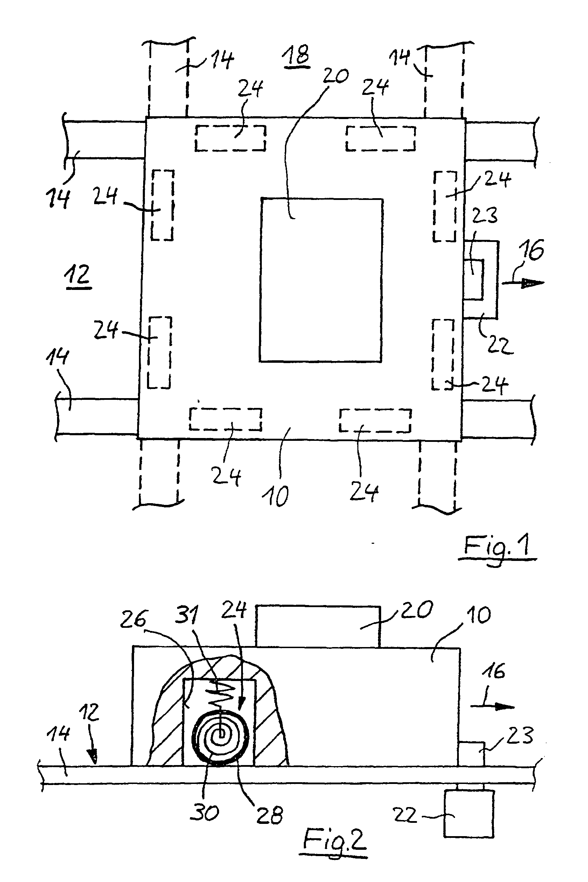

In der Figur 1 ist ein Werkstückträger 10 gezeigt, der auf einem ersten Gurtförderer 12 aufliegt, von dem nur ein Segment dargestellt ist. Der Gurtförderer 12 weist zwei parallel verlaufende Gurte 14 auf, womit es sich um einen sogenannten Doppelgurtförderer handelt. Alternativ könnte es sich anstelle des Gurtförderers 12 auch um einen Gurtförderer handeln, der beispielsweise nur einen Gurt von einer solchen Breite aufweist, daß der Werkstückträger 10 sicher transportiert werden kann. Mit einem Pfeil ist die betriebsmäßige Transportrichtung 16 des Gurtförderers 12 angegeben. Im rechten Winkel zum ersten Gurtförderer 12 ist mit gestrichelten Linien ein zweiter Gurtförderer 18 angedeutet. Der Werkstückträger 10 kann ebenfalls entlang dieses zweiten Gurtförderers 18 transportiert werden. Auf dem Werkstückträger 10 ist symbolisch ein Werkstück 20 dargestellt, wobei es auch mehrere Werkstücke 20 sein können. In Transportrichtung 16 ist vor dem Werkstückträger 10 ein Stopper 22 mit einem verfahrbaren Nocken 23 angeordnet. Der Stopper 22 dient dem Anhalten des Werkstückträgers 10, worauf jedoch später noch genauer eingegangen wird.

Weiterhin sind in der Figur 1 durch gestrichelte Rechtecke Energiespeicher 24 angedeutet, die am Werkstückträger 10 befestigt sind. Im vorliegenden Ausführungsbeispiel sind je Gurt 14 zwei Energiespeicher 24 so hintereinander angeordnet, daß sie mit dem jeweiligen Gurt 14 des Gurtförderers 12 oder 18 zusammenwirken können. Es sind also je Transportrichtung 16 des Werkstückträgers 10 vier Energiespeicher 24 vorgesehen. Zwei hintereinander angeordnete Energiespeicher 24 sind dabei so beabstandet, daß sie, wenn sie nicht zum Einsatz kommen, den Transport des Werkstückträger 10 auf dem jeweiligen Gurtförderer 12, 18 nicht behindern, d.h. daß der äußere Abstand zweier hintereinander angeordneter Energiespeicher 24, die auf dem Gurtförderer 12 zum Einsatz kommen, geringer ist als der kleinste Abstand der beiden Gurte 14 des Gurtförderers 18 und umgekehrt. Wichtig jedenfalls ist, daß der Werkstückträger 10 mindestens einen Energiespeicher 24 aufweist. Vorteilhafter ist es jedoch, daß je Transportrichtung 16 des Werkstückträgers 10 mindestens zwei Energiespeicher 24 vorgesehen sind. Hierbei ist für jeden Gurt 14 eines Gurtförderers 12, 18 ein Energiespeicher 24 vorgesehen.

In der Figur 2 ist in einem Ausbruch aus dem Werkstückträger 10 eine Ausnehmung 26 dargestellt. In dieser Ausnehmung 26 ist in vereinfachter Form eine erste mögliche Ausführung eines Energiespeichers 24 angeordnet. Der Energiespeicher 24 weist ein als Koppelelement fungierendes, drehbar angeordnetes Reibrad 28 auf, das mit dem Gurtförderer 12, 18 in Wirkverbindung steht. Der Energiespeicher 24 weist weiterhin eine als Spiralfeder 30 ausgebildete Feder auf, welche mit dem Reibrad 28 in Wirkverbindung steht, d.h. daß die Spiralfeder 30 durch das Reibrad 28 spannbar ist. Im Zentrum der Spiralfeder 30 und am Werkstückträger 10 ist eine schraubenförmige Andrückfeder 31 derart angeordnet, daß der Energiespeicher 24 durch die Andrückfeder 31 an den Gurtförderer 12, 18 drückbar ist, womit die Reibung zwischen dem Reibrad 28 und dem Gurt 14 erhöhbar ist.

Der Transport des Werkstückträgers 10 auf dem stetig fördernden Gurtförderer 12, 18 ist aufgrund des Nockens 23 des Stoppers 22, der in die Förderbahn des Werkstückträgers 10 verfahrbar ist, in gestoppter Weise dargestellt. Durch eine beispielsweise pneumatische Betätigung des Stoppers 22 ist der Nocken 23 unter eine durch die Gurte 14 des Gurtförderers 12, 18 gebildete Transportebene verfahrbar, womit der Werkstückträger 10 weiterförderbar ist.

Im normalen Betrieb hat der Werkstückträger 10 für den Transport durch den Gurtförderer 12, 18 die gleiche Geschwindigkeit wie der Gurtförderer 12, 18. Vor Bearbeitungsstationen oder vor Übergabestellen, in denen der Werkstückträger 10 beispielsweise vom Gurtförderer 12 an den Gurtförderer 18 übergeben wird, wird ein Werkstückträger 10 beispielsweise durch den Nocken 23 des Stoppers 22 angehalten. Dies ist dann notwendig, wenn sich ein weiterer Werkstückträger 10 gerade in einer Bearbeitungsstation befindet oder in einer Übergabestelle vom einen Gurtförderer 12 zum anderen Gurtförderer 18 umgesetzt wird. Dadurch kann es auch zu dem Fall kommen, daß sich mehrere Werkstückträger 10 hintereinander auf einem Gurtförderer 12 befinden können. Ist die Bearbeitungsstation oder die Übergabestelle wieder frei, so kann der nächste Werkstückträger 10 einlaufen. Die Zeit jedoch, in der beispielsweise der Werkstückträger 10 in der Bearbeitungsstation angelangt ist, geht verloren, da in dieser Zeit keine Bearbeitung erfolgen kann, wodurch die Taktzeit der gesamten Fertigungsanlage steigt.

Befindet sich der erfindungsgemäße Werkstückträger 10 gerade in einer Warteposition, d.h. wird seine Fahrt auf dem Gurtförderer 14, 18 durch den Nocken 23 des Stoppers 22 aufgehalten, so ist die Geschwindigkeit des Werkstückträgers 10 gleich Null. Die Geschwindigkeit des Gurtes 14 des Gurtförderers 12, 18 bleibt jedoch unverändert. Bewegt sich der Gurt 14 in der in der Figur 2 angegebenen Transportrichtung 16, d.h. in der Zeichnung nach rechts, so wird das Reibrad 28 durch die Förderbewegung im Gegenuhrzeigersinn gedreht. Durch diese Drehbewegung jedoch wird die Spiralfeder 30 gespannt, d.h. sie nimmt Energie auf. Damit das Reibrad 28 bei gespannter Spiralfeder 30 nicht zu stark entgegen der Transportrichtung 16 des Gurtes 14 durchdreht, wird das Reibrad 28 durch die Andrückfeder 31 gegen den Gurt 14 gepreßt. Wird der Werkstückträger 10 durch den Nocken 23 freigegeben, d.h. daß die Bewegung nicht mehr abgebremst wird, so kann sich die Spiralfeder 30 entspannen und gibt somit die aufgenommene Energie wieder ab. In der Figur 2 betrachtet wird dadurch das Reibrad 28 im Uhrzeigersinn gedreht. Der Werkstückträger 10 erfährt somit eine zusätzliche Beschleunigung in Richtung der Transportrichtung 16. Vorteilhafterweise ist diese Beschleunigung so groß, daß die Geschwindigkeit des Werkstückträgers 10 größer als die des Gurtförderers 12 ist. Auf diese Weise kann die Taktzeit einer Fertigungsanlage stark gesenkt werden. Das Prinzip zur Senkung der Taktzeiten beruht also darauf, daß bei einem gegenüber dem Gurtförderer 12, 18 abgebremsten Werkstückträger 10 Energie in den Werkstückträger 10 übertragbar ist. Bei einem gegenüber dem Gurtförderer 12, 18 nicht mehr abgebremsten Werkstückträger 10 wird diese aufgenommene Energie wieder abgegeben, so daß der Werkstückträger 10 eine zusätzliche Beschleunigung erfährt. Die Übertragung der Energie erfolgt hierbei durch die Förderbewegung des Gurtförderers 12, 18. Als Koppelelement fungiert das Reibrad 28, als Energiespeicher die Spiralfeder 30.

Eine Übertragung von Energie erfolgt in diesem Fall nicht nur bei einem Werkstückträger 10, dessen Geschwindigkeit Null ist. Sobald die Geschwindigkeit des Werkstückträgers 10 unter die des Gurtförderers 12, 18 sinkt, wird Energie in den Energiespeicher 24 übertragen. Eine verminderte Geschwindigkeit kann beispielsweise vorliegen, wenn sich mehrere Werkstückträger 10 hintereinander stauen. Bei einem stillstehenden Werkstückträger 10 ist es auch möglich, in anderer Form Energie in einen Energiespeicher 24 zu übertragen, als dies durch die Förderbewegung des Gurtförderers 12, 18 erfolgt. Dies kann beispielsweise durch eine seitlich oder unterhalb des Gurtförderers 12, 18 angeordnete, zusätzliche Vorrichtung erfolgen, die durch entsprechende Einrichtungen die Spiralfeder 30 spannt. Diese aufgenommene Energie kann auch in anderer Form wieder abgegebenen werden. Möglich wäre ein separates Widerlager, an dem sich ein Koppelelement abstützt, um die Energie vom Energiespeicher an das Widerlager abzugeben. Die Übertragung der Energie durch die Förderbewegung des Gurtförderers 12, 18 ist jedoch die einfachste Methode.

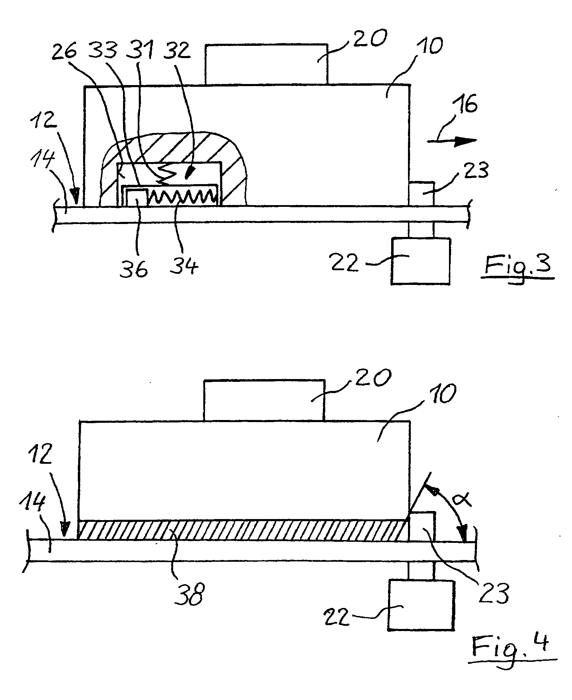

In einer Ausnehmung 26 des Werkstückträgers 10 aus der Figur 3 ist ein zweiter abgewandelter Energiespeicher 32 dargestellt. In einer Aufnahme 33, die von einer Andrückfeder 31 gegen den Gurtförderer 12, 18 gedrückt ist und die auf der Seite des Gurtes 14 offen ist, ist eine im wesentlichen parallel zum Gurt 14 wirkende Schraubenfeder 34 und ein als Reibschuh 36 ausgebildetes Koppelelement angeordnet. Die Aufnahme 33 ist in der Ausnehmung 26 im wesentlichen senkrecht zur Transportrichtung 16 des Gurtförderers 12, 18 beweglich angeordnet. Wird der Werkstückträger 10 gegenüber dem Gurtförderer 12, 18 abgebremst, so wird der Reibschuh 36 in Richtung der Transportrichtung 16 durch den Gurt 14 verschoben. Dadurch ist die Schraubenfeder 34 spannbar, d.h. daß sie dadurch Energie aufnimmt. Wird der Werkstückträger 10 nicht mehr abgebremst, so entspannt sich die Schraubenfeder 34 und gibt die aufgenommene Energie wieder ab, wodurch der Werkstückträger 10 gegenüber dem Gurtförderer 12, 18 beschleunigt wird.

An dem Werkstückträger 10 aus der Figur 4 sind elastische Fortsätze in Form von Borsten 38 angeordnet, die mit dem Gurtförderer 12, 18 zusammenwirken. Ausgehend von der Transportrichtung 16 des Gurtförderers 12, 18 hin zu den Borsten 38 wird ein Winkel α eingeschlossen, der kleiner als 90° ist. Durch die Borsten 38 ist somit ein Belag zwischen dem Werkstückträger 10 und dem Gurtförderer 12, 18 vorgesehen, der bei einer Geschwindigkeit des Werkstückträgers 10, die niedriger ist, als die Geschwindigkeit des Gurtförderers 12, 18 einen ersten Reibungskoeffizienten µ₁ aufweist. Durch die gegenüber dem Werkstückträger 10 höhere Geschwindigkeit der Gurte 14 des Gurtförderers 12, 18 werden die Enden der Borsten in Richtung der Transportrichtung 16 gebogen. Wird die Bewegung des Werkstückträgers 10 freigegeben bzw. nicht mehr abgebremst, so biegen sich die Borsten 38 aufgrund ihres elastischen Verhaltens wieder in die Ausgangsposition. Dadurch erfährt der Werkstückträger 10 eine zusätzliche Beschleunigung. Idealerweise ist die Geschwindigkeit des Werkstückträgers 10 gegenüber der Geschwindigkeit des Gurtförderers 12, 18 höher. Das heißt, daß bei einer Geschwindigkeit des Werkstückträgers 10, die höher ist, als die Geschwindigkeit des Gurtförderers 12, 18, der Belag einen zweiten Reibungskoeffizienten µ₂ aufweist, der niedriger ist, als der erste Reibungskoeffizient µ₁, weshalb es sich hier um ein anisotropes Reibungsverhalten handelt. Die Borsten 38 lassen sich somit auch als Energiespeicher einsetzen. Idealerweise lassen sich die Borsten 38 jedoch in Kombination mit den Energiespeichern 24 oder 32 verwenden. Bei freigegebenen Bewegungen der Werkstückträger 10 gemäß den Figuren 2 oder 3 wirkt die Reibung zwischen dem Werkstückträger 10 und dem Gurt 14 des Gurtförderers 12, 18 einer durch die Energiespeicher 24, 32 verursachten Beschleunigung entgegen. Durch die Verwendung von Borsten 38 läßt sich diese die Beschleunigung mindernde Reibung reduzieren.

Am einfachsten läßt sich jedoch die Reibungsproblematik dadurch umgehen, daß der Werkstückträger 10 beispielsweise nur über Reibräder 28 eines Energiespeichers 24 mit Gurten 14 der Gurtförderer 12, 18 in Kontakt ist. Hierfür muß die Summe der Federkräfte der Andrückfedern 22 der je Transportrichtung 16 vorgesehenen vier Energiespeicher 24 größer sein, als die vom Werkstückträger 10 einschließlich der zu transportierenden Werkstücke 20 ausgeübte betriebsmäßige Gewichtskraft.

## Patentansprüche

1. Werkstückträger (10) für den Transport durch wenigstens einen Gurtförderer (12, 18), insbesondere einen Doppelgurtförderer, **dadurch gekennzeichnet, daß** der Werkstückträger (10) mindestens einen Energiespeicher (24, 32, 38) aufweist, in den bei einem gegenüber dem Gurtförderer (12, 18) abgebremsten Werkstückträger (10) Energie übertragbar ist und der bei einem gegenüber dem Gurtförderer (12, 18) nicht mehr abgebremsten Werkstückträger (10) die aufgenommene Energie abgibt, so daß der Werkstückträger (10) eine zusätzliche Beschleunigung erfährt.

2. Werkstückträger (10) nach Anspruch 1, **dadurch gekennzeichnet, daß** der mindestens eine Energiespeicher (24, 32, 38) wenigstens ein Koppelelement (28, 36) aufweist, das mit dem Gurtförderer (12, 18) in Wirkverbindung steht und daß die Energie durch die Förderbewegung des Gurtförderers (12, 18) in den mindestens einen Energiespeicher (24, 32) übertragbar ist.

3. Werkstückträger (10) nach Anspruch 2, **dadurch gekennzeichnet, daß** der mindestens eine Energiespeicher (24, 32) wenigstens eine Feder aufweist, welche mit dem wenigstens einen Koppelelement (28, 36) in Wirkverbindung steht und welche die Energie aufnimmt und abgibt.

4. Werkstückträger (10) nach Anspruch 3, **dadurch gekennzeichnet, daß** das wenigstens eine Koppelelement ein drehbar angeordnetes Reibrad (28) ist und daß die wenigstens eine Feder eine Spiralfeder (30) ist, die durch das Reibrad (28) spannbar ist.

5. Werkstückträger (10) nach Anspruch 3, **dadurch gekennzeichnet, daß** das wenigstens eine Koppelelement ein Reibschuh (36) ist, und daß die wenigstens eine Feder eine Schraubenfeder (34) ist, die durch den vom Gurtförderer (12, 18) verschiebbaren Reibschuh (36) spannbar ist.

6. Werkstückträger (10) nach einem der Ansprüche 1 bis 5, **dadurch gekennzeichnet, daß** zwischen dem Werkstückträger (10) und dem wenigstens einen Gurtförderer (12, 18) ein Belag (38) vorgesehen ist, der bei einer Geschwindigkeit des Werkstückträgers (10), die niedriger ist, als die Geschwindigkeit des wenigstens einen Gurtförderers (12, 18) einen ersten Reibungskoeffizienten (µ₁) aufweist und der bei einer Geschwindigkeit des Werkstückträgers (10), die höher ist, als die Geschwindigkeit des wenigstens einen Gurtförderers (12, 18), einen zweiten Reibungskoeffizienten (µ₂) aufweist, der niedriger ist als der erste Reibungskoeffizient (µ₁).

7. Werkstückträger (10) nach einem der Ansprüche 1 bis 6, **dadurch gekennzeichnet, daß** an dem Werkstückträger (10) elastische Fortsätze (38) angeordnet sind, die mit dem Gurtförderer (12, 18) zusammenwirken, wobei ein Winkel (α) zwischen den elastischen Fortsätzen (38) und der Transportrichtung (16) des wenigstens einen Gurtförderers (12, 18) kleiner als 90° ist.

8. Werkstückträger (10) nach einem der Ansprüche 1 bis 7, **dadurch gekennzeichnet, daß** der mindestens eine Energiespeicher (24) durch wenigstens eine Andrückfeder (31) an den Gurtförderer (12, 18) drückbar ist.

9. Werkstückträger (10) nach einem der Ansprüche 1 bis 8, **dadurch gekennzeichnet, daß** je Transportrichtung (16) des Werkstückträgers (10) mindestens zwei Energiespeicher (24, 32, 38) vorgesehen sind.

10. Werkstückträger (10) nach einem der Ansprüche 1 bis 9, **dadurch gekennzeichnet, daß** je Transportrichtung (16) des Werkstückträgers (10) vier Energiespeicher (24, 32) vorgesehen sind, und daß die Summe der Federkräfte der Andrückfedern (31) der je Transportrichtung (16) vorgesehenen vier Energiespeicher (24) größer ist als die vom Werkstückträger (10) ausgeübte betriebsmäßige Gewichtskraft.

## Claims

1. Work carrier (10) for transport by at least one belt conveyor (12, 18), in particular a double belt conveyor, **characterized in that** the work carrier (10) has at least one energy storage mechanism (24, 32, 38), into which energy can be transferred when a work carrier (10) is braked relative to the belt conveyor (12, 18) and which delivers the energy absorbed when a work carrier (10) is no longer braked relative to the belt conveyor (12, 18), so that the work carrier (10) experiences an additional acceleration.

2. Work carrier (10) according to Claim 1, **characterized in that** the at least one energy storage mechanism (24, 32, 38) has at least one coupling element (28, 36) which is in operative connection with the belt conveyor (12, 18), and **in that** the energy can be transferred into the at least one energy storage mechanism (24, 32) by the conveying movement of the belt conveyor (12, 18).

3. Work carrier (10) according to Claim 2, **characterized in that** the at least one energy storage mechanism (24, 32) has at least one spring which is in operative connection with the at least one coupling element (28, 26) and which absorbs and delivers the energy.

4. Work carrier (10) according to Claim 3, **characterized in that** the at least one coupling element is a rotatably arranged friction wheel (28), and **in that** the at least one spring is a spiral spring (30) which can be loaded by the friction wheel (28).

5. Work carrier (10) according to Claim 3, **characterized in that** the at least one coupling element is a friction shoe (36), and **in that** the at least one spring is a helical spring (34) which can be loaded by the friction shoe (36), which can be displaced by the belt conveyor (12, 18).

6. Work carrier (10) according to one of Claims 1 to 5, **characterized in that** a lining (38) is provided between the work carrier (10) and the at least one belt conveyor (12, 18), which lining (38), at a speed of the work carrier (10) which is lower than the speed of the at least one belt conveyor (12, 18), has a first coefficient of friction (µ₁) and which lining (38), at a speed of the work carrier (10) which is higher than the speed of the at least one belt conveyor (12, 18), has a second coefficient of friction (µ₂) which is lower than the first coefficient of friction (µ₁).

7. Work carrier (10) according to one of Claims 1 to 6, **characterized in that** elastic extensions (38) which interact with the belt conveyor (12, 18) are arranged on the work carrier (10), an angle (α) between the elastic extensions (38) and the transport direction (16) of the at least one belt conveyor (12, 18) being less than 90°.

8. Work carrier (10) according to one of Claims 1 to 7, **characterized in that** the at least one energy storage mechanism (24) can be pressed against the belt conveyor (12, 18) by at least one pressure spring (31).

9. Work carrier (10) according to one of Claims 1 to 8, **characterized in that** at least two energy storage mechanisms (24, 32, 38) are provided per transport direction (16) of the work carrier (10).

10. Work carrier (10) according to one of Claims 1 to 9, **characterized in that** four energy storage mechanisms (24, 32) are provided per transport direction (16) of the work carrier (10), and **in that** the sum of the spring forces of the pressure springs (31) of the four energy storage mechanisms (24) provided per transport direction (16) is greater than the operational force due to weight exerted by the work carrier (10).

## Revendications

1. Support de pièces (10) pour un transport assuré par au moins un transporteur à courroies (12, 18), notamment un transporteur à double courroie,
**caractérisé en ce que**
le support de pièces (10) présente au moins un accumulateur d'énergie (24, 32, 38) auquel de l'énergie peut être transmise quand le support de pièces (10) est freiné par rapport au transporteur à courroies (12, 18) tandis que, quand ce transporteur n'est plus freiné, le support de pièces (10) délivre l'énergie qu'il a reçue, de sorte que le support de pièces (10) reçoit une accélération supplémentaire.

2. Support de pièces (10) selon la revendication 1,
**caractérisé en ce que**
l'accumulateur d'énergie (24, 32, 38) au nombre d'un au moins, présente un élément de couplage (28, 36) qui est en interaction avec le transporteur à courroies (12, 18), l'énergie produite par le mouvement du transporteur à courroies (12, 18) pouvant être transmise à au moins un accumulateur d'énergie (24, 32).

3. Support de pièces (10) selon la revendication 2,
**caractérisé en ce que**
l'accumulateur d'énergie (24, 32), au nombre d'un au moins, présente au moins un ressort en interaction avec au moins un élément de couplage (28, 36) qui reçoit et délivre l'énergie.

4. Support de pièces (10) selon la revendication 3,
**caractérisé en ce que**
l'élément de couplage, au nombre d'un au moins, est une roue de friction (28) pouvant tourner, et le ressort, au nombre d'un au moins, est un ressort spiral (30) qui peut être mis sous tension par la roue de friction (28).

5. Support de pièces (10) selon la revendication 3,
**caractérisé en ce que**
l'élément de couplage, au-nombre d'un au moins, est un patin de friction (36), et le ressort, au nombre d'un au moins, est un ressort hélicoïdal (34) qui peut être mis sous tension par le patin de friction (36) que le transporteur à courroies (12, 18) peut faire coulisser.

6. Support de pièces (10) selon l'une des revendications 1 à 5,
**caractérisé en ce qu'**
entre le support de pièces (10) et le transporteur à courroies (12, 18), au nombre d'un au moins, est prévu une garniture (38) qui présente, quand la vitesse du support de pièces (10) est inférieure à la vitesse du transporteur (12, 18), un premier coefficient de friction (µ₁), tandis que, quand la vitesse du support de pièces est supérieure à la vitesse du transporteur (12, 18), elle présente un second coefficient de friction (µ₂) inférieur au premier (µ₁).

7. Support de pièces (10) selon l'une des revendications 1 à 6,
**caractérisé en ce que**
sur le support de pièces (10) des appendices élastiques (38) coopèrent avec le transporteur à courroies (12, 18), ces appendices élastiques (38) faisant un angle (α) inférieur à 90° avec la direction de transport (16) du transporteur à courroies (12, 18) au nombre d'un au moins.

8. Support de pièces (10) selon l'une des revendications 1 à 7,
**caractérisé en ce que**
l'accumulateur d'énergie (24), au nombre d'un au moins, peut être appliqué en pression sur le transporteur à courroies (12, 18) par au moins un ressort de pression (31).

9. Support de pièces (10) selon l'une des revendications 1 à 8,
**caractérisé par**
au moins deux accumulateurs d'énergie (24, 32, 38) pour chaque direction de transport (16) du support de pièces (10)

10. Support de pièces (10) selon l'une des revendications 1 à 9,
**caractérisé en ce que**
pour chaque direction de transport (16) du support de pièces (10) il est prévu quatre accumulateurs d'énergie (24, 32), et la somme des forces des ressorts de pression (31) des quatre accumulateurs d'énergie (24) prévus pour chaque direction de transport (16) est supérieure à la force exercée par le poids du support de pièces (10).
